# EUROPÄISCHE PATENTSCHRIFT

(11) **EP 2 882 789 B1**
(45) Veröffentlichungstag und Bekanntmachung des Hinweises auf die Patenterteilung: **30.10.2019**
(21) Anmeldenummer: 13747390.6
(22) Anmeldetag: 08.08.2013
(51) Int. Cl.: C08G 18/34, C08G 18/78

(54) **VERFAHREN ZUR HERSTELLUNG VON IMIDGRUPPEN ENTHALTENDEN POLYMERSCHÄUMEN**
PROCESS FOR PRODUCING POLYMER FOAMS COMPRISING IMIDE GROUPS
PROCÉDÉ DE PRODUCTION DE MOUSSES POLYMÈRES CONTENANT DES GROUPES IMIDE

(30) Priorität: 09.08.2012 EP 12179827
(43) Veröffentlichungstag der Anmeldung: 17.06.2015
(73) Patentinhaber: BASF SE, 67056 Ludwigshafen am Rhein (DE)
(72) Erfinder: MÜLLER-CRISTADORO, Anna, Raleigh, NC 27617 (DE); PRISSOK, Frank, 49448 Lemförde (DE)
(74) Vertreter: BASF IP Association
(86) Internationale Anmeldenummer: PCT/EP2013/066617
(87) Internationale Veröffentlichungsnummer: WO 2014/023796

(56) Entgegenhaltungen:
- DE-A1- 4 325 014
- DE-A1- 19 804 911
- GB-A- 1 137 263
- US-A- 4 184 021

## Beschreibung

Die vorliegende Erfindung betrifft ein Verfahren zur Herstellung eines Imidgruppen enthaltenden Polymerschaumes, den so erhältlichen Polymerschaum, die Verwendung Imidgruppen enthaltender Polyisocyanate zu seiner Herstellung und dessen Verwendung.

Polymerschäume, wie Polyurethan- und Polyurethan-Polyharnstoff-Schäume auf der Basis von Di- oder Polyisocyanaten sind seit langem bekannt. Polyurethan-Hartphasen haben eine im Vergleich zu einer Polyamid-Hartphase deutlich geringere Schmelztemperatur, was einen entscheidenden Einfluss auf den Einsatz der Materialien bei hohen Temperaturen hat.

Weiterhin sind die Reaktion von Carbonsäuren mit Isocyanaten zu gemischten Carbaminsäureanhydriden und die teilweise weitere Reaktion zu Amiden bekannt. Dabei wird die Reaktion und deren Mechanismus beispielsweise von R. W. Hoffman in Synthesis 2001, No. 2, 243 - 246 und I. Scott in Tetrahedron Letters, Vol. 27, No. 11, pp 1251 - 1254, 1986 beschrieben.

Oligomere Verbindungen, die eine Reaktion zwischen einem Diisocyanat und einer Dicarbonsäure verwenden, werden von K. Onder in Rubber Chemistry and Technology, Vol. 59, Seiten 615 - 622 und von T. O. Ahn in Polymer Vol. 39, No. 2, pp. 459 - 456, 1998 beschrieben.

EP 0 527 613 A2 beschreibt die Herstellung von Schäumen, die Amidgruppen enthalten. Diese werden mittels organischer Polyisocyanate und polyfunktionaler organischer Säuren hergestellt. Dabei werden die Schäume mittels einer Additionsreaktionsreaktion hergestellt, indem ein organisches Polyisocyanat mit dem Reaktionsprodukt eines Polyoxyalkylens und einer organischen Polycarbonsäure-Komponente reagiert. Dabei reagieren die zwei Isocyanatgruppen mit einer Kohlenstoffdioxid erzeugenden Verbindung. Diese Verbindung ist das Reaktionsprodukt von einem Polyoxyalkylenpolyamin oder einer Polyol-Komponente mit einer organischen Polycarboxylsäure-Komponente. Die Polyoxyalkylenpolyamin- oder Polyol-Komponente hat ein mittleres Molekulargewicht von 200 bis 5000 g/mol. Die Starttemperatur für die Reaktion beträgt mindestens 150 °C, wobei die Reaktionszeit in einem Bereich von einer halben Stunde bis zwölf Stunden liegt.

DE 42 02 758 A1 beschreibt ein Schaumstoff mit Urethan- und Amidgruppen, der unter Verwendung von Polyhydroxycarbonsäuren mit einer Kettenlänge von 8 bis 200 Kohlenstoffatomen herstellbar ist. Dabei werden die Polyhydroxycarbonsäuren zweckmäßigerweise durch Ringöffnung epoxidierter ungesättigter Fettsäuren mit Hydroxylgruppen-haltigen Verbindungen, wie Wasser, Alkohol oder Hydroxycarbonsäuren hergestellt. Die Rohdichten der Schaumstoffe liegen in einem Bereich von 33 bis 190 kg/m³.

JP 2006-137870 A beschreibt ein Verfahren, um einen Polyamidschaum herzustellen und die Anwendung dieses Polyamidschaums. Dabei werden eine Polyisocyanat-Komponente und eine Polyesterpolycarbonsäure-Komponente miteinander zur Reaktion gebracht, wobei ein Phosphinoxid als Katalysator fungiert. Dabei wird die Reaktionsmischung auf mindestens 170 °C erwärmt.

Nachteilig an den bekannten Polyurethan/Polyamid-Schäumen ist, dass die Ausgangsstoffe entweder erst bei höheren Temperaturen zur Reaktion gebracht werden, nicht komplett miteinander reagieren oder die Schäume eine Schaumdichte aufweisen, die nicht Standardpolyurethanrezepturen entspricht.

Die prioritätsältere, nicht vorveröffentlichte europäische Patentanmeldung mit dem Aktenzeichen 12 161 392.1, angemeldet am 27.03.2012, mit dem Titel "Verfahren zur Herstellung von Polymerhartschäumen" beschreibt ein Verfahren zur Herstellung eines Polymerschaums, bei dem mindestens eine Polyisocyanat-Komponente, mindestens eine Polyol-Komponente und mindestens eine Polycarbonsäure-Komponente in Gegenwart einer Lewis-Base-Komponente als Katalysator umgesetzt werden.

Die WO 2011/147723 beschreibt Werkstoffe, die mindestens einen Kautschuk und mindestens ein Polyimid enthalten, wobei das Polyimid ein verzweigtes Kondensationsprodukt von mindestens einem Polyisocyanat mit im Mittel mehr als zwei Isocyanatgruppen pro Molekül und mindestens einer Polycarbonsäure mit mindestens drei Carboxylgruppen pro Molekül oder ihrem Anhydrid ist. Das Polyimid wird eingesetzt, um die Anbindung von Polyurethanen an Kautschuke zu verbessern.

Aufgabe der vorliegenden Erfindung ist es, Polymerschäume und Verfahren zu ihrer Herstellung bereitzustellen, wobei die Polymertschäume auch bei hohen Temperaturen in Gegenwart von Feuchtigkeit und/oder bei hohen Drücken formstabil sind, so dass sie auch in der Nähe von Motor, Getriebe oder Abgasführung verwendet werden können. Des Weiteren sollen die Polymerschäume vorteilhafte Eigenschaften bezüglich lang anhaltender Elastizität, Abriebfestigkeit, Zugfestigkeit, Weiterreißfestigkeit und Druckverformungskräften aufweisen. Aufgabe ist es weiterhin, einen Polymerschaum bereitzustellen, der Polyamidgruppen aufweist, die durch eine Reaktion von Diisocyanat-Komponenten mit Dicarbonsäuren-Komponenten in kurzen Zeiten erhältlich sind, wobei vorzugsweise keine zusätzlichen Treibmittel erforderlich sind.

Gegenüber der EP 12 161 392.1 bestand zudem die Aufgabe, die thermische Stabilität der Polymerschäume zu verbessern. Das Dokument US 3 562 189 A offenbart die Herstellung von harten Polyimide-Schäumen zur thermischen Isolierung. Im Beispiel 1 wird die Herstellung eines harten Schaums aus einem Tetracarbonsäuredianhydrid, einem Polyisocyanat, einem Diol und einem Treibmittel. Der Schaum hat eine Dichte von 45 g/L.

Die Aufgaben werden erfindungsgemäß gelöst durch ein Verfahren zur Herstellung eines Polymerschaums, umfassend die Umsetzung der Komponenten A bis C in Gegenwart von Komponente D und gegebenenfalls E oder eines Isocyanatgruppen-haltigen Prepolymers der Komponenten A und B mit Komponente C in Gegenwart von Komponente D und gegebenenfalls E, deren Gesamtmenge 100 Gew.% ergibt,
(A) 35 bis 65 Gew.-% mindestens einer Polyisocyanat-Komponente A,
   wobei 10 bis 100 Gew.-% der Komponente A ein Polyimidgruppen enthaltendes Kondensationsprodukt mindestens einer Polyisocyanat-Komponente mit mindestens einer Polycarbonsäure mit mindestens 3 COOH-Gruppen pro Molekül oder ihrem Anhydrid sind,
(B) 5 bis 50 Gew.-% von mindestens einer Polyol-Komponente B,
(C) 1 bis 59 Gew.-% von mindestens einer Polycarbonsäure-Komponente C und
(D) 0,01 bis 3 Gew.-% mindestens einer Lewis-Base-Komponente D,
(E) 0 bis 5 Gew.-% mindestens einer Schaumstabilisator-Komponente E,
wobei die Umsetzung unter Freisetzung von Kohlendioxid erfolgt. Neben den Komponenten A bis D und gegebenenfalls E können weitere Inhaltsstoffe im Umsetzungsgemisch vorliegen.

Das erfindungsgemäße Verfahren zeichnet sich dadurch aus, dass sich durch die Reaktion einer Carbonsäuregruppe mit einer Isocyanatgruppe ein gemischtes Carbaminsäureanhydrid bildet, welches durch eine weitere Reaktion ein Amid bildet. Durch die CO₂-Abspaltung aus den Carbaminsäureanhydriden mittels Lewis-Basen als Katalysatoren lassen sich die Polymerschäume ähnlich schnell erhalten, wie beispielsweise Polymerschäume, die auf Polyurethanbasis aufgebaut sind. Da bei dieser Reaktion das Treibgas aus den Komponenten selbst frei wird, kann die Umsetzung nahezu oder vollständig wasser- und treibmittelfrei erfolgen.

Der Polymerschaum kann unterschiedliche Eigenschaften aufweisen. Beispielsweise kann es sich um einen Hartschaum oder einen Weichschaum handeln. Bei dem Polymerschaum kann es sich vorzugsweise um einen Polymerhartschaum handeln.

Unter einem Polymerhartschaum kann im Sinne der vorliegenden Erfindung verstanden werden, dass bei der Herstellung des Polymerhartschaums eine Volumenveränderung des Reaktionsgemisches bis zum endgültigen Reaktionsende auftritt, auch nach Beendigung der Hauptreaktion, da die Schaummatrix noch viskos ist und das Gas sich innerhalb des Schaums weiter ausdehnen kann. Dabei kann vorteilhafterweise der Polymerschaum Zellen bzw. Hohlräume innerhalb des Polymerschaums und auch auf der Oberfläche des Polymerschaums aufweisen.

Die erfindungsgemäßen Polymerhartschäume können vorzugsweise eine Druckspannung bei 10 % Stauchung von größer gleich 80 kPa, bevorzugt größer gleich 150 kPa, besonders bevorzugt größer gleich 180 kPa aufweisen. Weiterhin kann der Polymerhartschaum vorzugsweise nach DIN ISO 4590 über eine Geschlossenzelligkeit von mindestens 70 %, bevorzugt größer 85 % verfügen. Weitere Details zu bevorzugten erfindungsgemäßen Polymerhartschäumen finden sich im "Kunststoffhandbuch, Band 7, Polyurethane", Carl Hanser Verlag, 3. Auflage 1993, Kapitel 6. Für Polyurethan-Schaumstoffe kann auch auf DIN 7726 verwiesen werden.

Durch den erfindungsgemäßen Einsatz der Lewis-Base-Komponente als Beschleuniger, bzw. Katalysator in der Umsetzung, ist es möglich, die Polyaddition und die Polykondensation gleichmäßig und mit hoher Geschwindigkeit auszuführen, so dass sowohl der Molekulargewichtsaufbau und das Gelieren des entstehenden Polymers als auch das Aufschäumen, insbesondere durch das freigesetzte Kohlendioxid, gleichzeitig derart erfolgen, dass sich ein stabiler gleichmäßiger Schaum ausbildet, der sich sodann verfestigt. Es wurde erfindungsgemäß gefunden, dass die Verwendung einer Lewis-Base-Komponente für beide Teilreaktionen ausreicht und die Reaktionen so aufeinander abgestimmt sind, dass gleichzeitig mit der Gasentstehung und Schaumbildung ein Viskositätsanstieg verbunden ist, der zu einer gleichmäßigen Ausbildung des Schaums führt. Wenn die Viskosität bereits zu stark angestiegen ist, kann anderenfalls die Schaumbildung beeinträchtigt werden. Wenn während der Schaumbildung der Viskositätsanstieg noch zu gering ist, bzw. keinerlei Gelierprozess eingesetzt hat, kann das entstandene Gas durch das flüssige Polymer aufsteigen und aus diesem entweichen, bzw. sich an der Oberfläche ansammeln, so dass keine gleichmäßige Schaumstruktur entsteht. Im erfindungsgemäßen Verfahren werden diese Probleme überwunden, und es resultiert ein Polymerschaum mit gleichmäßiger Zellenverteilung über den gesamten Querschnitt des Polymerschaums.

Ferner wurde erfindungsgemäß gefunden, dass bei Einsatz der erfindungsgemäßen Mengen der Komponenten, die Kohlendioxidbildung ausreichend ist zur Herstellung eines geeigneten Polymerschaums, so dass keine externen Treibmittel zugesetzt werden müssen. Sofern ein Schaum mit geringerer Dichte gewünscht ist, können jedoch auch externe Treibmittel zusätzlich mitverwendet werden. Bevorzugt wird auf den Zusatz von externen Treibmitteln verzichtet. Ebenso wird erfindungsgemäß ein Zusatz von Wasser zum Reaktionsgemisch oder die Gegenwart von Wasser im Reaktionsgemisch weitgehend oder gänzlich vermieden. Bevorzugt wird die Umsetzung weitgehend oder gänzlich wasserfrei, d. h. in Abwesenheit von Wasser durchgeführt. Wasser ist bevorzugt im Umsetzungsgemisch nicht enthalten.

Durch den Einsatz eines Polyimidgruppen enthaltenden Kondensationsproduktes mindestens einer Polyisocyanat-Komponente mit mindestens einer Polycarbonsäure mit mindestens drei Carboxylgruppen pro Molekül oder ihrem Anhydrid als Teil oder Ersatz der Polyisocyanat-Komponente A ist es möglich, die thermische Stabilität der gebildeten Schäume nochmals zu verbessern.

Die einzelnen erfindungsgemäß eingesetzten Komponenten werden nachstehend näher erläutert.

Die erfindungsgemäß eingesetzte Polyisocyanat-Komponente A enthält 10 bis 100 Gew.-%, vorzugsweise 50 bis 100 Gew.-%, insbesondere 70 bis 100 Gew.-% eines Polyimidgruppen enthaltenden Kondensationsproduktes mindestens einer Polyisocyanat-Komponente mit mindestens einer Polycarbonsäure mit mindestens drei Carboxylgruppen pro Molekül oder ihrem Anhydrid als Komponente A2, neben 0 bis 90 Gew.-%, vorzugsweise 0 bis 50 Gew.-%, insbesondere 0 bis 30 Gew.-% einer keine Polyimidgruppen enthaltenden Polyisocyanat-Komponente A1.

Die Polyisocyanat-Komponente A2 kann sich durch Umsetzung der Polyisocyanat-Komponente A1 mit mindestens einer Polycarbonsäure mit mindestens drei Carboxylgruppen pro Molekül oder ihrem Anhydrid ableiten. Daher wird zunächst die Polyisocyanat-Komponente A1 beschrieben und nachfolgend ihre Umsetzung mit Polycarbonsäuren zur Polyimidgruppen enthaltenden Polyisocyanat-Komponente A2.

Im Sinne der vorliegenden Erfindung können unter mindestens einer Polyisocyanat-Komponente, hier auch als Komponente A1 bezeichnet, mehrfunktionelle aromatische und/oder aliphatische Isocyanate, z. B. Diisocyanate verstanden werden.

Vorteilhafterweise kann die Polyisocyanat-Komponente A1 eine Funktionalität bezüglich Isocyanatgruppen in einem Bereich von 1,8 bis 5,0 besonders bevorzugt eine Funktionalität von 1,9 bis 3,5 und ganz besonders bevorzugt eine Funktionalität von 2,0 bis 3,0 aufweisen.

Vorzugsweise enthalten die geeigneten mehrfunktionellen Isocyanate im Mittel 2 bis höchstens 4 NCO-Gruppen. Geeignete Isocyanate sind beispielsweise 1,5-Naphthylendiisocyanat, Xylylendiisocyanat (XDI), Tetramethylxylylendiisocyanat (TMXDI), Diphenyldimethylmethandiisocyanatderivate, Di- und Tetraalkyldiphenylmethandiisocyanat, 4,4 -Dibenzyldiisocyanat, 1,3-Phenylendiisocyanat, 1,4-Phenylendiisocyanat, die Isomeren des Toluylendiisocyanats (TDI), gegebenenfalls in Mischung, 1-Methyl-2,4-diisocyanato-cyclohexan, 1,6-Diisocyanato-2,2,4-trimethylhexan, 1,6-Diisocyanato-2,4,4-trimethylhexan, 1-Isocyanatomethyl-3-isocyanato-1,5,5-trimethyl-cyclohexan (IPDI), chlorierte und bromierte Diisocyanate, phosphorhaltige Diisocyanate, 4,4 -Diisocyanatophenylperfluorethan, Tetramethoxybutan 1,4-diisocyanat, Butan-1,4-diisocyanat, Hexan-1,6-diisocyanat (HDI), Dicyclohexylmethandiisocyanat, Cyclohexan-1,4-diisocyanat, Ethylendiisocyanat, Phthalsäure-bis-isocyanatoethylester, ferner Polyisocyanate mit reaktionsfähigen Halogenatomen, wie 1-Chlormethylphenyl-2,4-diisocyanat, 1-Brommethylphenyl-2,6-diisocyanat, 3,3-Bis-chlormethylether-4,4 min -diphenyldiisocyanat.

Weitere wichtige Diisocyanate sind Trimethylhexamethylendiisocyanat, 1,4-Diisocyanatobutan, 1,12-Diisocyanatododecan und Dimerfettsäurediisocyanat.

Besonders geeignet sind 4,4 -Diphenylmethandiisocyanat (MDI), hydriertes MDI (H₁₂MDI), polymeres Methylendiphenyldiisocyanat, wobei das polymere Methylendiphenyldiisocyanat vorteilhafterweise eine Funktionalität von mindestens 2,2 aufweist.

Im Rahmen einer weiteren Ausführungsform des erfindungsgemäßen Verfahrens weist die Komponente A1 ein mittleres Molekulargewicht in einem Bereich von 100 g/mol bis 750 g/mol, vorteilhafterweise ein mittleres Molekulargewicht in einem Bereich von 130 g/mol bis 500 g/mol und insbesondere ein mittleres Molekulargewicht in einem Bereich von 250 g/mol bis 450 g/mol auf.

Zur Herstellung der Polyisocyanat-Komponente A2 kann die Polyisocyanat-Komponente A1 mit mindestens einer Polycarbonsäure mit mindestens drei Carboxylgruppen pro Molekül oder ihrem Anhydrid einer weiteren Kondensationsreaktion unterworden werden, wobei ein Polyimidgruppen enthaltendes Kondensationsprodukt resultiert. Die hierzu verwendete Polycarbonsäure wird auch als Komponente A2b bezeichnet, während die eingesetzte Polyisocyanat-Komponente A2a der Polyisocyanat-Komponente A1 entsprechen kann.

Als Polycarbonsäuren A2b werden aliphatische oder vorzugsweise aromatische Polycarbonsäuren gewählt, die mindestens drei COOH-Gruppen pro Molekül aufweisen, oder die betreffenden Anhydride, vorzugsweise wenn sie in niedermolekularer, also nicht polymerer Form vorliegen. Auch solche Polycarbonsäuren mit drei COOH-Gruppen sind mit umfasst, bei denen zwei Carbonsäuregruppen als Anhydrid vorliegen und die dritte als freie Carbonsäure.

In einer bevorzugten Ausführungsform der vorliegenden Erfindung wählt man als Polycarbonsäure A2b eine Polycarbonsäure mit mindestens 4 COOH-Gruppen pro Molekül oder das betreffende Anhydrid.

Beispiele für Polycarbonsäuren A2b und ihre Anhydride sind 1,2,3-Benzoltricarbonsäure und 1,2,3-Benzoltricarbonsäuredianhydrid, 1,3,5-Benzoltricarbonsäure (Trimesinsäure), bevorzugt 1,2,4-Benzoltricarbonsäure (Trimellitsäure), Trimellitsäureanhydrid und insbesondere 1,2,4,5-Benzoltetracarbonsäure (Pyromellitsäure) und 1,2,4,5-Benzoltetracarbonsäuredianhydrid (Pyromellitsäuredianhydrid), 3,3',4,4"-Benzophenontetracarbonsäure, 3,3',4,4"-Benzophenontetracarbonsäuredianhydrid, weiterhin Benzolhexacarbonsäure (Mellitsäure) und Anhydride der Mellitsäure.

Weiterhin geeignet sind Mellophansäure und Mellophansäureanhydrid, 1,2,3,4-Benzoltetracarbonsäure und 1,2,3,4-Benzoltetracarbonsäuredianhydrid, 3,3,4,4-Biphenyltetracarbonsäure und 3,3,4,4-Biphenyltetracarbonsäuredianhydrid, 2,2,3,3-Biphenyltetracarbonsäure und 2,2,3,3-Biphenyltetracarbonsäuredianhydrid, 1,4,5,8-Naphthalintetracarbonsäure und 1,4,5,8-Naphthalintetracarbonsäuredianhydrid, 1,2,4,5-Naphthalintetracarbonsäure und 1,2,4,5-Naphthalintetracarbonsäuredianhydrid, 2,3,6,7-Naphthalintetracarbonsäure und 2,3,6,7-Naphthalintetracarbonsäuredianhydrid, 1,4,5,8-Decahydronaphthalintetracarbonsäure und 1,4,5,8-Decahydronaphthalintetracarbonsäuredianhydrid, 4,8-dimethyl,1,2,3,5,6,7-hexahydronaphthalin 1,2,5,6-tetracarbonsäure und 4,8-dimethyl-1,2,3,5,6,7-hexahydronaphthalin 1,2,5,6-tetracarbonsäuredianhydrid, 2,6-Dichloronaphthalin-1,4,5,8-tetracarbonsäure und 2,6-Dichloronaphthalin-1,4,5,8-tetracarbonsäuredianhydrid, 2,7-Dichloronaphthalin-1,4,5,8-tetracarbonsäure und 2,7-Dichloronahphthalin-1,4,5,8-tetracarbonsäuredianhydrid, 2,3,6,7-Tetrachloronaphthalin-1,4,5,8-tetracarbonsäure und 2,3,6,7-Tetrachloronaphthalin-1,4,5,8-tetracarbonsäuredianhydrid, 1,3,9,10-Phenanthrentetracarbonsäure und 1,3,9,10-Phenanthrentetracarbonsäuredianhydrid, 3,4,9,10 Perylentetracarbonsäure und 3,4,9,10 Perylentetracarbonsäuredianhydrid, Bis(2,3-dicarboxyphenyl)methan und Bis(2,3-dicarboxyphenyl)methandianhydrid, Bis(3,4-dicarboxyphenyl)methan und Bis(2,3-dicarboxyphenyl)methandianhydrid, Bis(3,4-dicarboxyphenyl)methan und Bis(3,4-dicarboxyphenyl)methandianhydrid, 1,1 Bis(2,3-dicarboxyphenyl)methan und 1,1-Bis(2,3-dicarboxyphenyl)ethandianhydrid, 1,1-Bis(3,4-dicarboxyphenyl)ethan und 1,1-Bis(3,4-dicarboxyphenyl)ethandianhydrid, 1,1-Bis(3,4-dicarboxyphenyl)ehtan und 1,1-Bis(3,4-dicarboxyphenyl)ethandianhydrid, 2,2-Bis(2,3dicarboxyphenyl)propan und 2,2-Bis(2,3-dicarboxyphenyl)propandianhydrid, 2,3-Bis(3,4-dicarboxyphenyl)propan und 2,3-Bis(3,4-dicarboxyphenyl)propandianhydrid, Bis-(3,4-carboxyphenyl)sulfon und Bis(3,4-carboxyphenyl)-sulfondianhydrid, Bis(3,4-carboxyphenyl)ether und Bis(3,4-carboxyphenyl)etherdianhydrid, Ethylentetracarbonsäure und Ethylentetracarbonsäuredianhydrid, 1,2,3,4-Butantetracarbonsäure und 1,2,3,4-Butantetracarbonsäuredianhydrid, 1,2,3,4-Cyclopentantetracarbonsäure und 1,2,3,4-Cyclopentantetracarbonsäuredianhydrid, 2,3,4,5-Pyrrolidintetracarbonsäure und 2,3,4,5-Pyrrolidintetracarbonsäuredianhydrid, 2,3,5,6-Pyrazintetracarbonsäure und 2,3,5,6-Pyrazintetracarbonsäuredianhydrid, 2,3,4,5-Thiophentetracarbonsäure und 2,3,4,5-Thiophentetracarbonsäuredianhydrid.

Erfindungsgemäß bevorzugt werden Pyromellitsäure oder ihr Anhydrid eingesetzt.

In einer Ausführungsform der vorliegenden Erfindung setzt man Anhydride aus US 2,155,687 oder US 3,277,117 zur Synthese von Komponente A2 ein.

Lässt man Polyisocyanat A2a und Polycarbonsäure A2b - vorzugsweise in Gegenwart eines Katalysators - miteinander kondensieren, so wird unter Abspaltung von CO₂ und H₂O eine Imidgruppe gebildet. Setzt man statt Polycarbonsäure A2b das entsprechende Anhydrid ein, so wird unter Abspaltung von CO₂ eine Imidgruppe gebildet.

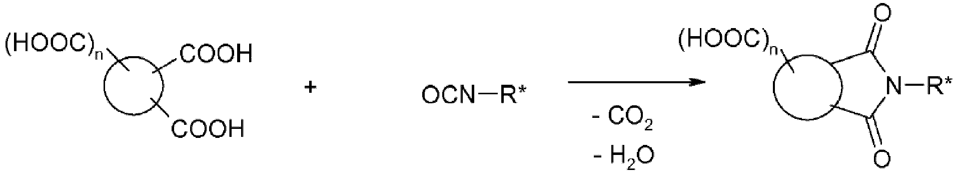

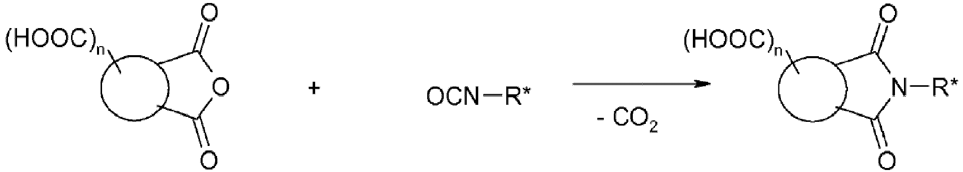

Dabei steht R* für den in der obigen Reaktionsgleichung nicht weiter zu spezifizierenden Rest von Polyisocyanat A2a, und n ist eine Zahl größer oder gleich 1, beispielsweise 1 im Falle einer Tricarbonsäure oder 2 im Falle einer Tetracarbonsäure, wobei (HOOC)ₙ durch eine Anhydridgruppe der Formel C(=O)-O-C(=O) ersetzt sein kann.

In einer Ausführungsform der vorliegenden Erfindung setzt man Polyisocyanat A2a in Mischung mit mindestens einem Diisocyanat ein, beispielsweise mit Toluylendiisocyanat, Hexamethylendiisocyanat oder mit Isophorondiisocyanat. In einer besonderen Variante setzt man Polyisocyanat A2a im Gemisch mit dem korrespondierenden Diisocyanat ein, beispielsweise trimeres HDI mit Hexamethylendiisocyanat oder trimeres Isophorondiisocyanat mit Isophorondiisocyanat oder polymeres Diphenylmethandiisocyanat (Polymer MDI) mit Diphenylmethandiisocyanat.

In einer Ausführungsform der vorliegenden Erfindung setzt man Polycarbonsäure A2b in Mischung mit mindestens einer Dicarbonsäure oder mit mindestens einer Dicarbonsäureanhydrid ein, beispielsweise mit Phthalsäure oder Phthalsäureanhydrid.

Komponenten A2a und A2b werden vorzugsweise im Gewichtsverhältnis 20:1 bis 1:1, besonders bevorzugt 10:1 bis 2:1, insbesondere 7:1 bis 3:1 eingesetzt.

Zur Durchführung des (erfindungsgemäßen) Syntheseverfahrens kann man Polyisocyanat (A2a) und Polycarbonsäure (A2b) bzw. Anhydrid (A2b) vorzugsweise in einem Mengenverhältnis einsetzen, dass der molare Anteil von NCO-Gruppen zu COOH-Gruppen im Bereich von 1 : 3 bis 3 : 1 liegt, bevorzugt sind 1 : 2 bis 2 : 1. Dabei zählt eine Anhydridgruppe der Formel CO-O-CO wie zwei COOH-Gruppen.

Komponente A2 weist vorzugsweise ein Molekulargewicht Mw im Bereich von 1000 bis 200.000 g/mol auf.

Komponente A2 weist vorzugsweise mindestens zwei Imidgruppen pro Molekül auf, besonders bevorzugt mindestens drei Imidgruppen pro Molekül.

Komponente A2 kann aus strukturell und molekular einheitlichen Molekülen zusammengesetzt sein, oder aus einer Mischung von molekular strukturell unterschiedlichen Molekülen. Beispielsweise kann die Polydispersität M_{W}/Mₙ mindestens 1,4 betragen, beispielsweise 1,4 bis 50, bevorzugt 1,5 bis 10. Die Polydispersität kann dabei nach bekannten Methoden bestimmt werden, insbesondere durch Gelpermeationschromatographie (GPC). Ein geeigneter Standard hierfür ist beispielsweise Polymethylmethacrylat (PMMA).

Komponente A2 kann neben den Imidgruppen, die im Polymergerüst vorliegen, end- oder seitenständige funktionelle Gruppen aufweisen, bei denen es sich um Anhydrid- oder Säuregruppen wie auch um freie oder verkappte NCO-Gruppen handeln kann.

Idealerweise kann mittels dieser Polyisocyanat-Komponente eine hohe Dichte an Amid-Bindungen pro Polymereinheit, die bei dem erfindungsgemäßen Verfahren hergestellt wird, erzielt werden. Dadurch kann vorzugsweise eine Hartphase mit vorteilhaften Eigenschaften generiert werden. Amide weisen höhere Schmelzpunkte und höhere Zersetzungstemperaturen als Urethane auf. Polymerhartschäume mit einem höheren Anteil an Amid-Bindungen weisen damit ebenfalls einen höheren Schmelzpunkt und eine höhere Zersetzungstemperatur auf und sind damit für Hochtemperaturanwendungen besonders geeignet, beispielsweise als Dämmmaterialien im Motorraum eines Kraftfahrzeugs. Durch Vorliegen der Imid-Bindungen kann die thermische Stabilität dabei nochmals verbessert werden. Komponente A2 weist vorzugsweise ein Zahlenmittel des Molekulargewichts im Bereich von 1000 bis 10.000 g/mol, besonders bevorzugt 2000 bis 5.000 g/mol auf.

In dem erfindungsgemäßen Verfahren erfolgt die Umsetzung von 35 - 75 Gew.-% mindestens einer Polyisocyanat-Komponente A, vorzugsweise von 40 - 70 Gew.-% mindestens einer Polyisocyanat-Komponente A und besonders bevorzugt von 50 - 65 Gew.-% mindestens einer Polyisocyanat-Komponente A. Insbesondere kann die Komponente A zusammen, nacheinander oder jeweils zuerst mit den jeweiligen Komponenten B, C und D sowie gegebenenfalls E in Kontakt gebracht werden. Beispielsweise können Komponenten A und B zur Herstellung eines Isocyanatgruppen-haltigen Prepolymers umgesetzt werden. Das Prepolymer weist dabei wiederum eine Isocyanat-Funktionalität von vorzugsweise 2,5 bis 3 auf.

Im Sinne der vorliegenden Erfindung können unter mindestens einer Polyol-Komponente B, hier auch als Komponente B bezeichnet, organische Verbindungen verstanden werden, die mindestens zwei freie Hydroxylgruppen aufweisen. Die Verbindungen sind dabei vorzugsweise frei von anderen funktionellen Gruppen oder reaktionsfähigen Gruppen, wie Säuregruppen. Vorzugsweise handelt es sich bei der Polyol-Komponente B um ein Polyetherpolyol oder Polyesterpolyol. Beispiele hierfür sind ein Polyoxyalkylen, ein Polyoxyalkenyl, ein Polyesterdiol, ein Polyesterol, ein Polyetherglycol, insbesondere ein Polypropylenglycol, ein Polyethylenglycol, ein Polypropylenglycol, ein Polypropylenethylenglycol verstanden werden oder Mischungen davon. Unter einer Mischung kann beispielsweise ein Copolymerisat verstanden werden, aber auch eine Mischung der Polymere. Die Polyglycol-Komponente weist bevorzugt ein mittleres Molekulargewicht von 200 g/mol bis 6000 g/mol, insbesondere ein mittleres Molekulargewicht von 250 g/mol bis 3000 g/mol und besonders bevorzugt ein mittleres Molekulargewicht von 300 g/mol bis 800 g/mol auf.

In einer weiteren Ausführungsform des erfindungsgemäßen Verfahrens weist die Komponente B eine OH-Zahl von 10 mg KOH/g bis 1000 mg KOH/g auf. Insbesondere kann die Komponente B eine OH-Zahl von 30 mg KOH/g bis 500 mg KOH/ g aufweisen.

Komponenten A und (B + C) können in einem molaren Verhältnis von Isocyanatgruppen der Komponente A zu mit Isocyanatgruppen reaktionsfähigen Gruppen, wie Hydroxyl- oder Carbonsäuregruppen der Komponenten B und C im Bereich von vorzugsweise 10 : 1 bis 1 : 2, besonders bevorzugt 5 : 1 bis 1 : 1,5, insbesondere 3 : 1 bis 1 : 1 eingesetzt werden.

Der Anteil der Komponente B in den Umsetzungsgemischen kann vorzugsweise 10 bis 30 Gew.-%, insbesondere 15 bis 20 Gew.-% betragen.

Unter mindestens einer Polycarbonsäure-Verbindung, vorzugsweise Dicarbonsäure-Komponente, hier auch als Komponente C bezeichnet, wird im Sinne der Erfindung eine organische Verbindung mit mindestens, bzw. genau zwei Carboxyl-gruppen, -COOH oder ein Säureanhydrid davon, verstanden. Die Carboxylgruppen können mit Alkyl- oder Cycloalkylresten oder mit aromatischen Resten verbunden sein. Es kann sich um aliphatische, aromatische, araliphatische oder alkylaromatische Polycarbonsäuren handeln, die auch Heteroatome, insbesondere Stickstoffatome und andere funktionelle Gruppen, z. B. Hydroxylgruppen oder Ketogruppen, aufweisen können. Die Poly- oder Dicarbonsäure-Komponente kann in den erfindungsgemäßen Verfahren in einem Bereich von 5 bis 50 Gew.-%, vorteilhafterweise in einem Bereich von 10 bis 30 Gew.-% und besonders bevorzugt in einem Bereich von 15 bis 20 Gew.-% bei der Umsetzung verwendet werden. Vorzugsweise enthält Komponente C keine Hydroxylgruppen zusätzlich zu den Carboxylgruppen. Es handelt sich damit vorzugsweise nicht um Polyhydroxycarbonsäuren. Besonders vorteilhaft können solche Poly- oder Dicarbonsäuren verwendet werden, die ausschließlich als funktionelle Gruppen Carboxylguppen und/oder deren Anhydride aufweisen. Ebenso können beispielsweise in einer weiteren Variante die Salze oder Ester der Komponente C verwendet werden, wie zum Beispiel das Salz aus dem Carboxylat und dem Ion eines Erdalkalimetalls. Vorzugsweise liegen bei der Umsetzung freie Säuregruppen vor. Beispiele geeigneter Polycarbonsäuren sind C₃₋₁₂-Alkanpolycarbonsäuren oderdicarbonsäuren, beispielsweise Malonsäure, Bernsteinsäure, Glutarsäure, Adipinsäure oder höhere Dicarbonsäuren, die auch C₁₋₃-Alkyl-substitutiert sein können. Geeignete aromatische Poly- oder Dicarbonsäuren sind beispielsweise Phthalsäure, Isophthalsäure, Terephthalsäure. Ferner kommen aliphatische ungesättigte Poly- oder Dicarbonsäure, wie Fumarsäure oder Maleinsäure und Ketogruppen enthaltende Dicarbonsäuren, wie Oxalessigsäure in Betracht.

Vorzugsweise wird Komponente C bei der Umsetzung zumindest teilweise, vorzugsweise vollständig gelöst in Komponente B eingesetzt. So können auch bei der Umsetzungstemperatur feste Polycarbonsäuren in einfacher Weise in die Umsetzung, bzw. das Reaktionsgemisch eingebracht werden.

Unter mindestens einer Lewis-Base-Komponente, hier auch als Komponente D bezeichnet, kann im Sinne der vorliegenden Erfindung eine Verbindung verstanden werden, die Elektronenpaare zur Verfügung stellen kann, wie dies beispielsweise unter dem Begriff "Lewis-Base" in der Chemie zu verstehen ist. Vorzugsweise befindet sich das freie Elektronenpaar in einer organischen Verbindung, kann aber auch an einem Metall oder an einer metallorganischen Verbindung gebunden sein.

Die Lewis-Base wird vorzugsweise in einer Menge von 0,05 bis 1 Gew.-%, besonders bevorzugt 0,1 bis 0,5 Gew.-%, verwendet.

In einer bevorzugten Ausführungsform des erfindungsgemäßen Verfahrens ist die Lewis-Base-Komponente ausgewählt aus der aus N-Methylimidazol, Melamin, Guanidin, Cyanursäure, Dicyandiamid oder deren Derivaten bestehenden Gruppe. Idealerweise kann die Lewis-Base die Bildung eines Carboxylates aus der Carbonsäure generieren, so dass dieses schnell mit der Diisocyanat-Komponente reagieren kann. Ebenfalls fungiert die Lewis-Base auch als Katalysator für die Abspaltung des CO₂ bei der Reaktion der Diisocyanat-Komponente mit der Dicarbonsäure-Komponente. Besonders vorteilhaft kann sich ein synergistischer Effekt aus der Bildung des Carboxylates und der Abspaltung von CO₂ mittels der Lewis-Base ergeben, so dass nur ein Katalysator oder Beschleuniger notwendig ist.

In einer weiteren Ausführungsform des erfindungsgemäßen Verfahrens erfolgt die Umsetzung in Gegenwart mindestens eines Schaumstabilisators E, wobei der Stabilisator E vorzugsweise ein Siloxancopolymer umfasst. Dabei ist das Polysiloxancopolymer vorzugsweise ausgewählt aus der Gruppe umfassend Polyether-Polysiloxancopolymere, wie Polyether-Polydimethylsiloxan-Copolymere.

Der Anteil der Komponente E beträgt 0 bis 5 Gew.-%, vorzugsweise 0 bis 3 Gew.-%, insbesondere 0 bis 1 Gew.-%. Sofern die Schaumstabilisator-Komponente E mitverwendet wird, beträgt ihr Anteil vorzugsweise 0,1 bis 5 Gew.-%, besonders bevorzugt 0,3 bis 3 Gew.-%, insbesondere 0,5 bis 1 Gew.-%.

Die Gesamtmengen der Komponenten A bis E ergeben dabei 100 Gew.-%. Dies bedeutet, dass im Umsetzungsgemisch weitere, von A bis E verschiedene, Komponenten vorliegen können, aber nicht müssen. Die Mengenangaben von Komponenten A bis E sind bezüglich ihrer Summe normiert.

Das Verfahren zur Herstellung eines Polymerschaumes kann bei einer Starttemperatur in einem Bereich von mindestens 15 °C bis höchstens 100 °C, bevorzugter von mindestens vorzugsweise 15 °C bis höchstens 80 °C, insbesondere bei einer Starttemperatur von mindestens 25 °C bis höchstens 75 °C, und besonders bevorzugt bei einer Starttemperatur von mindestens 30 °C bis höchstens 70 °C durchgeführt werden. Dabei kann die Umsetzung der oben genannten Komponenten bei Normaldruck erfolgen. Dadurch kann beispielsweise der Energieverbrauch bei der Herstellung des Polymerschaums reduziert werden. Ebenso kann der nachteilhafte Einfluss einer höheren Temperatur auf die Bildung einer Kernverbrennung umgangen werden, und Gasentstehung/Schaumbildung und Viskositätsanstieg sind - wie vorstehend beschrieben - gut aufeinander abgestimmt.

Dabei werden der Reaktor und das Umsetzungsgemisch auf die entsprechende Temperatur temperiert, bei der die Umsetzung gestartet wird. Im Laufe der Umsetzung kann sich die Temperatur erhöhen. Typischerweise wird das Behältnis, in dem die Umsetzung stattfindet, nicht separat erhitzt oder gekühlt, so dass die Reaktionswärme über die Behältniswände oder die Luft an die Umgebung abgeführt wird. Da eine Beschleunigung der Reaktion mittels der in dem erfindungsgemäßen Verfahren verwendeten Lewis-Base-Komponente erfolgt, wobei die Lewis-Base als Katalysator fungiert, können mit dem erfindungsgemäßen Verfahren Diisocyanat-Komponenten und Dicarbonsäuren-Komponenten zu einer Amid-Komponente vollständig und schnell weiterreagieren. Dabei muss vorteilhafterweise die Umsetzung nicht unter einer erhöhten Temperatur, wie sie beispielsweise in der EP 0 527 613 A2 beschrieben wird, durchgeführt werden.

In einer weiteren Ausgestaltung des erfindungsgemäßen Verfahrens kann die Umsetzung mit kurzkettigen Dicarbonsäuren, und Di- bzw. Polyisocyanaten erfolgen. Dies kann zum Beispiel die Entstehung von Blockcopolymeren ermöglichen.

Im Rahmen einer bevorzugten Ausführungsform des erfindungsgemäßen Verfahrens startet die Umsetzung zu dem Polymerschaum nach mindestens 3 bis 90 Sekunden, insbesondere nach 5 bis 70 Sekunden und ganz besonders bevorzugt nach 5 bis 40 Sekunden. Dabei bedeutet ein Starten der Reaktion, dass die Komponenten A, B, C und D, nachdem sie miteinander in Kontakt gebracht wurden, sich in die entsprechenden, bzw. in das entsprechende Produkt(e) umsetzen. Vorteilhafterweise braucht dabei nicht mit extern erwärmten Komponenten oder Reaktoren gearbeitet zu werden.

Im Rahmen einer weiteren Ausführungsform des erfindungsgemäßen Verfahrens weist der Polymerschaum eine Schaumdichte vorzugsweise von 8 g/l bis 200 g/l, besonders bevorzugt von 10 g/l bis 70 g/l und insbesondere von 15 g/l bis 45 g/l auf. Dadurch kann vorteilhafterweise eine Schaumdichte erzielt werden, die mit Polyurethanen nur schwer erzielt werden kann. Hierbei können aber idealerweise Diisocyanat-Komponenten und somit ebenfalls ähnliche Bedingungen bei der Herstellung verwendet werden.

Ein weiterer Gegenstand der vorliegenden Verbindung ist ein Polymerschaum, der sich von Polyisocyanaten, die zu mindestens 10 Gew.-% Polyimidgruppen enthaltende Kondensationsprodukte mindestens eines Polyisocyanats mit mindestens einer Polycarbonsäure mit mindestens 3 COOH-Gruppen pro Molekül oder ihrem Anhydrid sind, Polyolen oder einem Isocyanatgruppen-haltigen Prepolymer daraus sowie Polycarbonsäuren als Monomeren ableitet, in der Polymerhauptkette Urethan-, Imid- und Amidgruppen aufweist und vorzugsweise eine Schaumdichte von 8 g/l bis 200 g/l hat.

Ein weiterer Gegenstand der Erfindung ist die Verwendung von Polyisocyanaten, die zu mindestens 10 Gew.-% Polyimidgruppen enthaltende Kondensationsprodukte mindestens eines Polyisocyanats mit mindestens einer Polycarbonsäure mit mindestens 3 COOH-Gruppen pro Molekül oder ihrem Anhydrid sind, zur Herstellung von Polymerschäumen.

Unter einem Polyadditionsprodukt wird im Sinne der vorliegenden Erfindung ein chemisches Reaktionsprodukt verstanden, bei dem die Edukte miteinander reagieren, jedoch keine niedermolekularen Nebenprodukte, wie beispielsweise Wasser oder CO₂ entstehen, z. B. bei der Urethanbildung. Unter einem Polykondensationsprodukt kann im Sinne der vorliegenden Erfindung ein Produkt verstanden werden, das bei der Reaktion von zwei Edukten zumindest ein niedermolekulares Nebenprodukt liefert, z. B. Kohlendioxid bei der Amid-Bildung. Dabei kann demnach eine Polyglycol-Komponente mit einer Diisocyanat-Komponente ein Polyadditionsprodukt bilden und eine Dicarbonsäure-Komponente kann mit der Diisocyanat-Komponente unter Bildung eines Carbaminsäureanhydrids und Weiterreaktion zu einer Amidverbindung, unter CO₂-Bildung, als Polykondensationsreaktion verstanden werden.

Ein weiterer Gegenstand der vorliegenden Erfindung ist die Verwendung des erfindungsgemäßen Polymerschaums zur Wärmedämmung oder als Konstruktionswerkstoff.

Zur Wärmedämmung erfolgt dabei die Verwendung bevorzugt zur Herstellung von Kühl- oder Gefriergeräten, Geräten zur Warmwasserbereitung oder -speicherung oder von Teilen davon, oder zur Wärmedämmung von Gebäuden, Fahrzeugen oder Geräten.

Dabei wird insbesondere in den vorstehenden Anwendungen die Wärmedämmschicht der Vorrichtungen oder Geräte, Gebäude oder Fahrzeuge durch den erfindungsgemäßen Polymerschaum gebildet. Auch die gesamten Gehäuse oder Außenhüllen der Geräte, Gebäude oder Fahrzeuge können durch den erfindungsgemäßen Polymerschaum gebildet werden.

Als Konstruktionswerkstoff wird der erfindungsgemäße Polymerschaum vorzugsweise als Kernschaum zur Herstellung von Sandwichverbundwerkstoffen eingesetzt. Derartige Sandwichverbundwerkstoffe weisen typischerweise einen Kern aus einem Polymerschaum und eine Beplankung oder Hülle aus Holz, Metall oder bevorzugt einem Glasfaser-verstärktem Kunststoff auf. Der Kunststoff der Umhüllung oder Beplankung kann dabei frei gewählt werden. Häufig handelt es sich um Epoxid- oder Polyesterharze.

Derartige Sandwichverbundwerkstoffe werden bevorzugt in der Automobil-, Schiffbau-, Gebäudebau- oder Windanlagenindustrie eingesetzt.

Erfindungsgemäß werden unter Fahrzeugen Luft-, Land- oder Wasserfahrzeuge verstanden, insbesondere Flugzeuge, Automobile oder Schiffe.

Weitere Anwendungen der erfindungsgemäßen Polymerschäume sind dem Fachmann bekannt.

Die nachfolgenden Beispiele sollen die Erfindung näher erläutern:

### Beispiele:

In den folgenden Beispielen wurden die Molekulargewichte durch Gelpermeationschromatographie (GPC) bestimmt. Als Standard diente Polymethylmethacrylat (PMMA). Als Lösungsmittel kam Dimethylacetamid (DMAc) zum Einsatz. Der NCO-Gehalt wurde durch IR-Spektroskopie bestimmt.

Die Synthesen wurden, sofern nicht anders angegeben, unter Stickstoff durchgeführt.

### Herstellung von MDI-Imid

In einem 4L-fassenden Vierhalskolben, der mit Tropftrichter, Rückfluss-Kühler, Innenthermometer und Teflon-Röhre ausgestattet war, wurden 100 g 1,2,4,5-Benzoltetracarbonsäuredianhydrid (0,64 mol), gelöst in 1500 ml Aceton, vorgelegt, und 0,1 g Wasser wurden zugegeben. Dann wurden bei 20°C tropfenweise 465 g polymeres 4,4'-Diphenylmethandiisocyanat (Methylendiphenylendiisocyanat) mit einer mittleren Molmasse von 337 g/mol und einer Funktionalität von 2,5 (d. h. 2,5 Isocyanat-Gruppen pro Molekül) (1,38 mol) zugegeben. Unter Rühren wurde auf 55°C erwärmt und für weitere 6 Stunden bei dieser Temperatur unter Rückfluss weiter gerührt. Man verdünnte sodann durch Zugabe von 1000 g polymerem 4,4'-Diphenylmethandiisocyanat und erwärmte unter Rühren auf 55°C. Man rührte weitere sechs Stunden unter Rückfluss bei 55°C. Anschließend wurde über einen Zeitraum von einer Stunde das Aceton beim Normaldruck abdestilliert. Gegen Ende der Destillation wurde der so erhaltene Rückstand bei 70°C und 200 mbar mit Stickstoff gestrippt. Man erhielt ein MDI-Imid mit einer Isocyanat-Funktionalität von
27% (gemessen via IR)
Mₙ = 3200 g/mol, M_{w} = 4850 g/mol
M_{w}/Mₙ = 1,5

Das so erhaltene MDI-Imid wurde nachstehend zur Herstellung des Polymerschaums in Beispiel 1 eingesetzt.

### Herstellung von Polymerschäumen

In den folgenden Beispielen werden die Herstellung und die Eigenschaften von Polymerschäumen gezeigt. Die erfindungsgemäßen Materialien wurden im Labor mit einem Standmischer hergestellt. Sofern nicht anders angegeben, erfolgte die Umsetzung bei Umgebungstemperatur (22 °C) als Starttemperatur, d. h. die Komponenten wurden bei Umgebungstemperatur in einem nicht temperierten Reaktor oder Behältnis umgesetzt, und die Reaktionswärme wurde ohne weitere Hilfsmittel an die Umgebung abgeführt.

Gemäß Tabelle 1 wurden folgende Polymerschäume im Labor hergestellt. Die bei Raumtemperatur festen Dicarbonsäure-Komponenten wurden vorab in der Polyol-Komponente aufgeschmolzen und gelöst. Anschließend erfolgte der Umsatz der Diol-Dicarbonsäure-Mischung mit einem Polyisocyanat gemäß Beispiel 1 mit einem MDI-Imid. Es wurden Würfel mit einem Volumen von 20 l geschäumt, welche anschließend mechanisch geprüft wurden. Die Zusammensetzung der Ausgangssubstanzen sowie die Ergebnisse der Prüfung sind in Tabelle 1 bzw. Tabellen 2 und 3 angegeben.

Neben dem erfindungsgemäßen Polymerschaum gemäß Beispiel 1 wurden zwei bislang übliche Polymerschäume aus bekannten Zusammensetzungen als Vergleichsbeispiele 1 und 2 hergestellt. Hierbei war es erforderlich, Mischungen mehrerer Polyole und Mischungen mehrerer Katalysatoren einzusetzen, um zu verwendbaren Polymerschäumen zu gelangen.

Durch das erfindungsgemäße Verfahren ist eine derartige Vielzahl von Polyol- und Katalysatorkomponenten nicht mehr erforderlich. Polymerschäume mit hervorragenden Eigenschaften wurden bereits beim Einsatz einer einzigen Polyol-Komponente und eines einzigen Katalysators erhalten, wie aus den nachstehenden Tabellen hervorgeht.

**Tabelle 1**

| | Bsp. 1 | Vgl 1 | Vgl 2 |
|---|---|---|---|
| Säure 1 | 18,1 | | |
| Säure 2 | | 0,6 | |
| Polyol 1 | 18,1 | | 7,5 |
| Polyol 2 | | 18,3 | |
| Polyol 3 | | 5,7 | |
| Polyol 4 | | 3 | |
| Polyol 5 | | | 22,9 |
| Polyol 6 | | | 2,2 |
| Polyol 7 | | | 6,7 |
| Iso 1 | | | 58,3 |
| Iso 2 | | 57,6 | |
| MDI-Imid | 62,9 | | |
| Stabi 1 | 0,7 | | |
| Stabi 2 | | 0,8 | |
| Stabi 3 | | | 0,2 |
| Stabi 4 | | | 0,5 |
| Kat 1 | 0,2 | | 0,1 |
| Kat 2 | | 0,9 | |
| Kat 3 | | 0,5 | |
| Kat 4 | | | 0,2 |
| Treibmittel 1 | | 3,0 | |
| Treibmittel 2 | | | 1,5 |
| Additiv | | 9,5 | |

### Dabei bedeutet:

- Säure 1:: Pentandisäure M=132g/mol
- Säure 2:: 85 Teile Methansäure in 15 Teile Wasser
- Polyol 1:: Polypropylenglykol mit mittlerem Molekulargewicht (MW) von 420 g/mol
- Polyol 2:: Polyesterdiol (Phthalsäure-Ölsäurepolyesterdiol) mit einer mittleren Molmasse von 600 g/l
- Polyol 3:: Polyesterol (Phthalsäure-Ölsäurepolyesterdiol) mit einer mittleren Molmasse von 510 g/l und einer mittleren Funktionalität von 2,2
- Polyol 4:: Polyethylenglykol mit mittlerem Molekulargewicht (MW) von 600 g/mol
- Polyol 5:: Polypropylenglykol mit mittlerem Molekulargewicht (MW) von 500 g/mol
- Polyol 6:: Polypropylenglykol mit mittlerem Molekulargewicht (MW) von 1040 g/mol
- Polyol 7:: Polypropylenglykol mit mittlerem Molekulargewicht (MW) von 1070 g/mol
- Additiv:: Tri 2-Chlorisopropylphosphat
- Treibmittel 1:: n-Pentan
- Treibmittel 2:: Wasser
- Iso 1:: Polymeres Methylendiphenylendiisocyanat mit einer mittleren Molmasse von 337 g/mol und einer Funktionalität von 2,7
- Iso 2:: Polymeres Methylendiphenylendiisocyanat mit einer mittleren Molmasse von 362 g/mol und einer Funktionalität von 2,8
- MDI-Imid:: Polyimid auf Basis von Benzoltetracarbonsäuredianhydrid und polymerem Methylendiphenylendiisocyanat mit einem freien Isocyanat-Gehalt von 27%, hergestellt wie vorstehend beschrieben
- Stabi 1:: Polyether-Polysiloxan-Copolymer
- Stabi 2:: Polyether-Polydimethylsiloxan
- Stabi 3:: Silikon-Glykol-Copolymer
- Stabi 4:: Polyether-Polydimethylsiloxan-Copolymer
- Kat 1:: 1-Methylimidazol
- Kat 2:: 30 Teile eines Bis-(2-dimethylaminoethyl)ethers in Dipropylenglykol
- Kat 3:: 40 Teile Kaliumformiat, 6 Teile Wasser, 54 Teile Monoethylenglykol
- Kat 4:: N,N-Dimethylcyclohexylamin

### Beispiel 1 (erfindungsgemäß)

100 Teile Pentandisäure wurden zusammen mit 100 Teilen Polypropylenglykol mit einem MW von 420 g/mol im Heizschrank über 100°C erhitzt, bis die Pentandisäure vollständig aufgeschmolzen war. Anschließend wurde diese Säure-Polyol-Mischung homogenisiert und auf 60°C abgekühlt, bevor sie mit 4 Teilen Polyether-Polysiloxan-Copolymer und 0,8 Teilen 1-Methylimidazol vermischt wurde. Nach Zugabe von 347 Teilen wie vorstehend beschrieben hergestelltem MDI-Imid auf Basis von Benzoltetracarbonsäuredianhydrid und polymerem Methylendiphenylendiisocyanat erfolgt eine kräftige Durchmischung mit dem Laborrührer für 7s. Direkt im Anschluss wurde das System in eine Würfelform gegossen, in welcher es aufschäumte. Aus dem so hergestellten Polyamid-Polyurethanschaum wurden Prüfkörper entnommen und an diesen wurden die mechanischen/thermischen Tests durchgeführt.

### Vergleich Beispiel 1

Die Komponenten gemäß Tabelle 1 in Spalte Vgl 1 mit Ausnahme der Iso 2 wurden zusammen zu einer Gesamtansatzgröße von 350 Teilen anteilsgemäß eingewogen und anschließend homogenisiert. Diese Mischung wurde mit 490 Teilen Iso 2 kräftig mit einem Laborrührer verrührt und anschließend in die Würfelform gegossen. In der Form steigt der Hartschaum auf und wurde in ihr bis zur Aushärtung gelassen.

### Vergleich Beispiel 2

Die Komponenten gemäß Tabelle 1 in Spalte Vgl 2 mit Ausnahme der Iso 1 wurden zusammen zu einer Gesamtansatzgröße von 400 Teilen anteilsgemäß eingewogen und anschließend homogenisiert. Diese Mischung wurde mit 680 Teilen Iso 1 kräftig mit einem Laborrührer verrührt und anschließend in die Würfelform gegossen. In der Form steigt der Schaum auf und wurde in ihr bis zur Aushärtung gelassen.

### Eigenschaften der erhaltenen Produkte

**Tabelle 2**

| | Bsp. 1 | Vgl 1 | Vgl 2 |
|---|---|---|---|
| Dichte | 27 | 48 | 39 |
| Druckfest. | 0,19 | 0,12 | 0,09 |
| Stauchung | 6 | 10 | 12 |

| | | | |
|---|---|---|---|
| Dichte Raumgewicht Kern [kg/m³] Druckfest. Druckfestigkeit [N/mm²] nach DIN 53421 / DIN EN ISO 604 Stauchung Stauchung [%] nach DIN 53421 / DIN EN ISO 604 | | | |

Aus der Tabelle 2 ist erkennbar, dass der Schaum aus dem erfindungsgemäßen Beispiel in einem ähnlichen Dichtebereich eine höhere Druckfestigkeit aufweist. Der Stauchungswert fällt ebenfalls besser aus bei dem erfindungsgemäßen Schaum.

**Tabelle 3**

| | Bsp. 1 | Vgl 1 | Vgl 2 |
|---|---|---|---|
| Dichte | 27 | 48 | 39 |
| TGA | 290 | 214 | 185 |

| | | | |
|---|---|---|---|
| Dichte Raumgewicht Kern [kg/m³] TGA Thermogravimetrischen Analyse [°C] nach DIN EN ISO 11358 Auswertung auf Absolut-Wertbasis bei 95 % der Ausgangsprobenmasse | | | |

In der thermogravimetrischen Analyse erweist sich der erfindungsgemäße Schaum als temperaturstabiler als Hartschäume mit ähnlicher/vergleichbarer Dichte.

## Patentansprüche

1. Verfahren zur Herstellung eines Polymerschaums, umfassend die Umsetzung der Komponenten A bis C in Gegenwart von Komponente D und gegebenenfalls E oder eines Isocyanatgruppen-haltigen Prepolymers der Komponenten A und B mit Komponente C in Gegenwart von Komponente D und gegebenenfalls E, deren Gesamtmenge 100 Gew.% ergibt,
(A) 35 bis 65 Gew.-% mindestens einer Polyisocyanat-Komponente A,
wobei 10 bis 100 Gew.-% der Komponente A ein Polyimidgruppen enthaltendes Kondensationsprodukt mindestens einer Polyisocyanat-Komponente mit mindestens einer Polycarbonsäure mit mindestens 3 COOH-Gruppen pro Molekül oder ihrem Anhydrid sind,
(B) 5 bis 50 Gew.-% von mindestens einer Polyol-Komponente B,
(C) 1 bis 59 Gew.-% von mindestens einer Polycarbonsäure-Komponente C und
(D) 0,01 bis 3 Gew.-% mindestens einer Lewis-Base-Komponente D,
(E) 0 bis 5 Gew.-% mindestens einer Schaumstabilisator-Komponente E,
wobei die Umsetzung unter Freisetzung von Kohlendioxid erfolgt.

2. Verfahren nach Anspruch 1, **dadurch gekennzeichnet, dass** die Polyol-Komponente B ein mittleres Molekulargewicht von 200 g/mol bis 6000 g/mol aufweist, wobei das Molekulargewicht wie in der Beschreibung angegeben bestimmt wird.

3. Verfahren nach Anspruch 1 oder 2, **dadurch gekennzeichnet, dass** der Polymerschaum ein Polymerhartschaum ist.

4. Verfahren nach einem der Ansprüche 1 bis 3, **dadurch gekennzeichnet, dass** die Komponente B eine OH-Zahl von 10 mg KOH/g bis 1000 mg KOH/g aufweist.

5. Verfahren nach einem der Ansprüche 1 bis 4, **dadurch gekennzeichnet, dass** der Polymerschaum eine Schaumdichte von 8 g/l bis 200 g/l aufweist.

6. Verfahren nach einem der Ansprüche 1 bis 5, **dadurch gekennzeichnet, dass** die Lewis-Base-Komponente D ausgewählt ist aus N-Methylimidazol, Melamin, Guanidin, Cyanursäure, Dicyandiamid und deren Derivaten oder Gemischen davon, insbesondere N-Methylimidazol.

7. Verfahren nach einem der Ansprüche 1 bis 6, **dadurch gekennzeichnet, dass** die Umsetzung in Gegenwart einer Schaumstabilisator-Komponente E erfolgt, die ein Siloxancopolymer umfasst.

8. Verfahren nach einem der Ansprüche 1 bis 7, **dadurch gekennzeichnet, dass** die Polyol-Komponente B ein Polyetherpolyol oder Polyesterpolyol ist.

9. Verfahren nach einem der Ansprüche 1 bis 8, **dadurch gekennzeichnet, dass** bei der Umsetzung Komponente C gelöst in Komponente B eingesetzt wird.

10. Polymerschaum, erhältlich gemäß dem Verfahren nach einem der Ansprüche 1 bis 9.

11. Polymerschaum, der sich von
Polyisocyanaten, die zu mindestens 10 Gew.-% Polyimidgruppen enthaltende Kondensationsprodukte mindestens eines Polyisocyanats mit mindestens einer Polycarbonsäure mit mindestens 3 COOH-Gruppen pro Molekül oder ihrem Anhydrid sind,
Polyolen
oder einem Isocyanatgruppen-haltigen Prepolymer daraus
sowie Polycarbonsäuren
als Monomeren ableitet, in der Polymerhauptkette Urethan-, Imid- und Amidgruppen aufweist und vorzugsweise eine Schaumdichte von 8 g/l bis 200 g/l hat.

12. Verwendung von Polyisocyanaten, die zu mindestens 10 Gew.-% Polyimidgruppen enthaltende Kondensationsprodukte mindestens eines Polyisocyanats mit mindestens einer Polycarbonsäure mit mindestens 3 COOH-Gruppen pro Molekül oder ihrem Anhydrid sind, und mindestens einer Polycarbonsäure, zur Herstellung von Polymerhartschäumen.

13. Verwendung des Polymerschaums nach Anspruch 10 oder 11 zur Wärmedämmung oder als Konstruktionswerkstoff.

14. Verwendung nach Anspruch 13 zur Herstellung von Kühl- oder Gefriergeräten, Geräten zur Warmwasserbereitung oder -speicherung oder Teilen davon, oder zur Wärmedämmung von Gebäuden, Fahrzeugen oder Geräten.

15. Verwendung nach Anspruch 13 als Kernschaum von Sandwich-Verbundwerkstoffen.

## Claims

1. A process for producing a polymer foam comprising reacting components A to C in the presence of component D and optionally E or of an isocyanate-functional prepolymer of components A and B with component C in the presence of component D and optionally E, the total amount of which is 100 wt%,
(A) 35 to 65 wt% of at least one polyisocyanate component A,
wherein 10 to 100 wt% of component A is a condensation product comprising polyimide groups and obtained by condensing at least one polyisocyanate component with at least one polycarboxylic acid having at least 3 COOH groups per molecule or anhydride thereof,
(B) 5 to 50 wt% of at least one polyol component B,
(C) 1 to 59 wt% of at least one polycarboxylic acid component C, and
(D) 0.01 to 3 wt% of at least one Lewis base component D,
(E) 0 to 5 wt% of at least one foam stabilizer component E,
wherein said reacting is effected to release carbon dioxide.

2. The process according to claim 1 wherein said polyol component B has an average molecular weight in the range from 200 g/mol to 6000 g/mol, where the molecular weight is determined as stated in the description.

3. The process according to claim 1 or 2 wherein the polymer foam is a rigid polymer foam.

4. The process according to any of claims 1 to 3 wherein said component B has an OH number in the range from 10 mg KOH/g to 1000 mg KOH/g.

5. The process according to any of claims 1 to 4 wherein the polymer foam has a foam density in the range from 8 g/l to 200 g/l.

6. The process according to any of claims 1 to 5 wherein the Lewis base component D is selected from N-methylimidazole, melamine, guanidine, cyanuric acid, dicyandiamide and their derivatives or mixtures thereof, especially N-methylimidazole.

7. The process according to any of claims 1 to 6 wherein said reacting is effected in the presence of a foam stabilizer component E comprising a siloxane copolymer.

8. The process according to any of claims 1 to 7 wherein said polyol component B is a polyether polyol or polyester polyol.

9. The process according to any of claims 1 to 8 wherein component C is used dissolved in component B in the reaction.

10. A polymer foam obtainable via the process according to any of claims 1 to 9.

11. A polymer foam deriving from
polyisocyanates being to an extent of at least 10 wt% condensation products comprising polyimide groups and obtained by condensing at least one polyisocyanate with at least one polycarboxylic acid having at least 3 COOH groups per molecule or anhydride thereof,
polyols
or an isocyanate-functional prepolymer thereof and polycarboxylic acids
as monomers, including urethane, imide and amide groups in the polymer main chain and preferably having a foam density in the range from 8 g/l to 200 g/l.

12. The use of polyisocyanates being to an extent of at least 10 wt% condensation products comprising polyimide groups and obtained by condensing at least one polyisocyanate with at least one polycarboxylic acid having at least 3 COOH groups per molecule or anhydride thereof, and at least one polycarboxylic acid, in the manufacture of rigid polymer foams.

13. The use of the polymer foam according to claim 10 or 11 for thermal insulation or as an engineering material.

14. The use according to claim 13 in the manufacture of refrigerator or freezer appliances, appliances for hot water preparation or storage or parts thereof, or for thermal insulation of buildings, vehicles or appliances.

15. The use according to claim 13 as a core foam of sandwich composites.

## Revendications

1. Procédé de fabrication d'une mousse polymère, comprenant la mise en réaction des composants A à C en présence du composant D et éventuellement E ou d'un prépolymère contenant des groupes isocyanate des composants A et B avec le composant C en présence du composant D et éventuellement E, dont la quantité totale est de 100 % en poids,
(A) 35 à 65 % en poids d'au moins un composant polyisocyanate A,
10 à 100 % en poids du composant A étant un produit de condensation contenant des groupes polyimide d'au moins un composant polyisocyanate avec au moins un acide polycarboxylique contenant au moins 3 groupes COOH par molécule ou son anhydride,
(B) 5 à 50 % en poids d'au moins un composant polyol B,
(C) 1 à 59 % en poids d'au moins un composant acide polycarboxylique C, et
(D) 0,01 à 3 % en poids d'au moins un composant base de Lewis D,
(E) 0 à 5 % en poids d'au moins un composant stabilisateur de mousse E,
la mise en réaction ayant lieu avec libération de dioxyde de carbone.

2. Procédé selon la revendication 1, **caractérisé en ce que** le composant polyol B présente un poids moléculaire moyen de 200 g/mol à 6 000 g/mol, le poids moléculaire étant déterminé tel qu'indiqué dans la description.

3. Procédé selon la revendication 1 ou 2, **caractérisé en ce que** la mousse polymère est une mousse polymère dure.

4. Procédé selon l'une quelconque des revendications 1 à 3, **caractérisé en ce que** le composant B présente un indice OH de 10 mg de KOH/g à 1 000 mg de KOH/g.

5. Procédé selon l'une quelconque des revendications 1 à 4, **caractérisé en ce que** la mousse polymère présente une densité de mousse de 8 g/l à 200 g/l.

6. Procédé selon l'une quelconque des revendications 1 à 5, **caractérisé en ce que** le composant base de Lewis D est choisi parmi le N-méthylimidazole, la mélamine, la guanidine, l'acide cyanurique, le dicyandiamide et leurs dérivés ou des mélanges de ceux-ci, notamment le N-méthylimidazole.

7. Procédé selon l'une quelconque des revendications 1 à 6, **caractérisé en ce que** la mise en réaction a lieu en présence d'un composant stabilisateur de mousse E qui comprend un copolymère de siloxane.

8. Procédé selon l'une quelconque des revendications 1 à 7, **caractérisé en ce que** le composant polyol B est un polyéther-polyol ou un polyester-polyol.

9. Procédé selon l'une quelconque des revendications 1 à 8, **caractérisé en ce que** le composant C est utilisé sous forme dissoute dans le composant B lors de la mise en réaction.

10. Mousse polymère, pouvant être obtenue par le procédé selon l'une quelconque des revendications 1 à 9.

11. Mousse polymère, qui dérive
de polyisocyanates, qui sont à hauteur d'au moins 10 % en poids des produits de condensation contenant des groupes polyimide d'au moins un polyisocyanate avec au moins un acide polycarboxylique contenant au moins 3 groupes COOH par molécule ou son anhydride,
de polyols,
ou d'un prépolymère contenant des groupes isocyanate de ceux-ci,
ainsi que d'acides polycarboxyliques,
en tant que monomères, comprend des groupes uréthane, imide et amide dans la chaîne polymère principale, et présente de préférence une densité de mousse de 8 g/l à 200 g/l.

12. Utilisation de polyisocyanates, qui sont à hauteur d'au moins 10 % en poids des produits de condensation contenant des groupes polyimide d'au moins un polyisocyanate avec au moins un acide polycarboxylique contenant au moins 3 groupes COOH par molécule ou son anhydride, et d'au moins un acide polycarboxylique, pour la fabrication de mousses polymères dures.

13. Utilisation de la mousse polymère selon la revendication 10 ou 11 pour l'isolation thermique ou en tant que matériau de construction.

14. Utilisation selon la revendication 13 pour la fabrication d'appareils de réfrigération ou de congélation, d'appareils pour la préparation ou le stockage d'eau chaude ou de parties de ceux-ci, ou pour l'isolation thermique de bâtiments, de véhicules ou d'appareils.

15. Utilisation selon la revendication 13 en tant que mousse de noyau de matériaux composites en sandwich.
